# EUROPÄISCHE PATENTANMELDUNG

(11) **EP 3 002 066 A1**
(43) Veröffentlichungstag der Anmeldung: **06.04.2016**
(21) Anmeldenummer: 14187508.8
(22) Anmeldetag: 02.10.2014
(51) Int. Cl.: B05C 9/14, B31B 1/00, B65H 29/66

(54) **Vorrichtung zur Kühlung von auf einer Oberfläche von Sackkörpern aufgebrachtem Klebstoff**

(71) Anmelder: Starlinger & Co. Gesellschaft m.b.H., 1060 Wien (AT)
(72) Erfinder: Neumüller, Norbert, 2564 Weissenbach/Triesting (AT)
(74) Vertreter: Schwarz & Partner

(57) **Zusammenfassung**

Die Vorrichtung (1) zur Kühlung von auf einer Oberfläche (24) von Sackkörpern (20) aufgebrachtem Klebstoff (23) umfasst einen Transferförderer (2) und einen Kühlförderer (4). Der Transferförderer (2) befördert die Sackkörper (20) mit einer Transfergeschwindigkeit (3) zum Kühlförderer (4), und der Kühlförderer (4) befördert vom Transferförderer (2) übernommene Sackkörper (20) mit einer Kühlfördergeschwindigkeit (5). Die Transfergeschwindigkeit (3) ist höher als die Kühlfördergeschwindigkeit (5), wodurch die Sackkörper (20) auf dem Kühlförderer einander überlappend angeordnet werden. Durch diese höhere Packungsdichte wird eine hohe Verweilzeit der Sackkörper (20) im Kühlförderer (4) bei gleichzeitig hohem Durchsatz an Sackkörpern (20) durch die Vorrichtung erreicht.

## Beschreibung

Die Erfindung betrifft eine Vorrichtung zur Kühlung von auf einer Oberfläche von Sackkörpern aufgebrachtem Klebstoff, umfassend einen Transferförderer und einen Kühlförderer, wobei der Transferförderer Sackkörper mit einer Transfergeschwindigkeit zum Kühlförderer befördert und der Kühlförderer vom Transferförderer übernommene Sackkörper mit einer Kühlfördergeschwindigkeit befördert.

Der Markt verlangt immer häufiger nach hochwertig bedruckbaren stabilen Säcken für den Consumer Bereich. Besonders gefragt sind Seitenfaltensäcke, wie z.B. Pinch Bottom Säcke, aus Kunststoff insbesondere Kunststoffgewebe(-verbund), da dieses Material im Vergleich zu Säcken aus Papier eine sehr hohe Reißfestigkeit aufweist.

Besonders im Tierfutterbereich stellt austretendes Füllgut nicht nur ein Problem in Form von Verunreinigungen dar, sondern es werden auch Schädlinge angelockt, was zu Hygieneproblemen führen kann.

Die Herstellung von Seitenfaltenverpackungen aus Papier ist seit vielen Jahrzehnten bekannt. In der Praxis werden solche Verpackungen nach folgendem Verfahren hergestellt:
▪ Eine flache Papierbahn wird mit geraden oder gestuften Perforationslinien im Abstand der späteren Abschnittslänge versehen.
▪ Die flache Bahn wird zu einem Schlauch geformt und längs verklebt.
▪ Anschließend werden die Schlauchabschnitte durch Abreißen entlang der Perforationslinien getrennt.
▪ Ein Endbereich des abgerissenen Schlauchabschnitts wird zu einem Boden geformt und verklebt.

Die Konstruktion einer "Pinch Bottom-Verpackung" ist z.B. aus der US 4008850 A bekannt, wobei in diesem Dokument auch vorgeschlagen wird, kunststoffbeschichtetes Papier für das Bahnmaterial zu verwenden und Kunststoffbeschichtungsflächen zu verkleben.

Da die Nachfrage nach Pinch Bottom Säcken aus Kunststoff, insbesondere Kunststoffgewebe(-verbund), stetig ansteigt, steigen auch die Anforderungen an die Produktionsgeschwindigkeiten von Konfektionsanlagen für diese Säcke.

Ein Verfahren zur Herstellung von Pinch Bottom Säcken aus Kunststoff ist in der DE 102009056078 B4 beschrieben. Hier erfolgt die Konfektion der Säcke zumindest teilweise in Querrichtung zum Schlauchmaterial und der Pinch Boden wird mittels Wärmefügeverfahrens gebildet. Allerdings sind die Produktionsgeschwindigkeit und die Genauigkeit solcher Konfektionsanlagen durch eine erforderliche Eckumlenkung eingeschränkt.

Besonders hohe Produktionsgeschwindigkeiten werden von Konfektionsanlagen erreicht, in denen die Materialbahn bzw. der Materialschlauch und die Sackabschnitte während der Konfektion in Längsrichtung geführt werden.

Um den Sack beim späteren Abfüllprozess schnell und sauber verschließen zu können, wird bereits während der Konfektion der Säcke reaktivierbarer Klebstoff (z.B. Hot Melt) auf die offene Pinch Oberseite aufgetragen.

Damit die Säcke, die nach dem Herstellungsprozess gestapelt und palettiert werden, nicht zusammenkleben, muss der aufgetragene Klebstoff vollständig blockfrei, also nicht mehr klebrig, sein. Dazu wird bei der Verwendung eines Hot Melt Klebstoffes Abkühlung und Zeit benötigt.

Die Abkühlung und Zeit, die benötigt wird, bis der auf der offenen Pinch Oberseite aufgetragene Klebstoff blockfrei ist, stellen einen limitierenden Faktor für die Produktionsrate von Konfektionsanlagen dar. Ist der Klebstoff durch eine schnellere Produktion nicht vollständig blockfrei, kann es beim anschließendem Stapeln bzw. Palettieren zum Zusammenkleben der Säcke an den Pinch Oberseiten kommen. Dies führt zu erheblichen Schwierigkeiten beim Befüllen der Säcke in automatischen Abfüllanlagen.

Die Abkühlung von Hot Melt Klebstoffen kann durch Kühltrommeln, an deren Oberfläche die Säcke geführt werden, oder entlang sonstiger Kühlstrecken erfolgen. Kühltrommeln haben den Vorteil, dass der Klebstoff an der Kühltrommel anliegt und die Kühlenergie somit direkt übertragen werden kann.

Eine Möglichkeit die Produktivität der Sack-Konfektionsanlagen zu steigern, wäre die Rotationsgeschwindigkeit von Kühltrommeln zu erhöhen und die Temperatur des die Kühltrommel durchströmenden Kühlmittels zu senken. Dadurch könnte der Klebstoff auch bei einer kürzeren Umlaufzeit der Kühltrommel abgekühlt werden. Allerdings würde sich bei der Verwendung von Kühlmittel mit niedrigerer Temperatur Kondenswasser auf der Kühltrommel bilden. Da der Klebstoff nicht nur Abkühlung, sondern auch Zeit benötigt, um seine Blockfreiheit zu erreichen, kann nur durch eine schnellere Kühlung eine Blockfreiheit des Klebstoffes auf dem Sack direkt nach der Konfektion nicht garantiert werden.

Auch eine Erhöhung des Umfanges der Kühltrommel kann zu einer besseren Kühlleistung der Kühltrommel führen, dabei hätte der Klebstoff auch mehr Zeit, um seine Blockfreiheit zu erreichen. Allerdings würde sich der Einbau einer größeren Kühltrommel nachteilig auf den Platzbedarf der Konfektionsanlage auswirken.

In der WO 2013/109567 A1 wird eine Erfindung beschrieben, die das Zusammenkleben der hergestellten Pinch Bottom Säcke beim Stapeln oder Palettieren vermindert bzw. verhindern kann. Dazu wird der Klebstoff an der offenen Oberseite des Pinch Sackes mit einer speziellen Düse, welche mehrere Auslassöffnungen für den Klebstoff aufweist, aufgetragen, wodurch der Klebstoff in mehreren Streifen aufgetragen wird, sodass die Oberfläche des aufgetragenen Klebstoffes nicht gleichmäßig ist, sondern Erhöhungen und Vertiefungen aufweist. Es wird auch eine Variante beschrieben, bei der der Klebstoff in Form eines "fiberized overspray" aufgetragen wird. Insgesamt wird dadurch die Klebstoffoberfläche, mit der ein Sack im Stapel am nächsten Sack anliegt, reduziert und auch die Gefahr des Zusammenklebens der Säcke vermindert. Allerdings wird in diesem Dokument nicht darauf eingegangen, wie eine höhere Produktionsrate von Pinch Bottom Säcken mit reaktivierbarem Klebstoff an der offenen Pinch Oberseite erreicht und Blockfreiheit direkt nach der Herstellung garantiert werden kann.

Es ist daher eine Aufgabe der Erfindung, Pinch Bottom Säcke (z.B. aus Kunststoffgewebeverbund) mit reaktivierbarem Klebstoff an der offenen Pinch Oberseite bei hoher Produktionsrate herzustellen, wobei die Säcke bereits unmittelbar nach der Konfektion blockfrei sind, um beim Stapeln und Palettieren nicht zusammenzukleben.

Die Erfindung löst diese Aufgabe durch Bereitstellen einer Vorrichtung zur Kühlung von auf einer Oberfläche von Sackkörpern aufgebrachtem Klebstoff, umfassend einen Transferförderer und einen Kühlförderer, wobei der Transferförderer Sackkörper mit einer Transfergeschwindigkeit zum Kühlförderer befördert und der Kühlförderer vom Transferförderer übernommene Sackkörper mit einer Kühlfördergeschwindigkeit befördert. Erfindungsgemäß ist die Transfergeschwindigkeit höher als die Kühlfördergeschwindigkeit, wodurch die stromaufwärts vom Kühlförderer mit der Transfergeschwindigkeit in der Sack-Konfektionsanlage bewegten Sackkörper am Kühlförderer teilweise übereinanderliegend, sozusagen "geschuppt" angeordnet, zusammengeschoben werden, wobei der reaktivierbare (z.B. Hot Melt) Klebstoff, der an einer Oberfläche der Sackkörper aufgebracht wurde, an dem Kühlförderer anliegt. Durch die geringere Kühlfördergeschwindigkeit in Verbindung mit der teilweise übereinanderliegenden Anordnung der Sackkörper erreicht man eine lange Verweilzeit der Sackkörper am Kühlförderer, wodurch der Klebstoff auch bei höherer Produktionsrate, d.h. hoher Transfergeschwindigkeit, ausreichend Zeit zum Abkühlen hat und die Sackkörper am Ausgang des Kühlförderers bereits blockfrei sind.

Weitere vorteilhafte Ausgestaltungen der Erfindung sind in den Unteransprüchen und der nachfolgenden Beschreibung erläutert.

Um eine saubere Klebstoffaufbringung zu erzielen und zu vermeiden, dass Klebstoff die Sack-Konfektionieranlage verschmutzt, ist es günstig, wenn eine Klebstoffübertragungseinheit vorgesehen ist, die Klebstoff auf eine freiliegende Oberfläche von auf dem Transferförderer geförderten Sackkörpern aufbringt. Die Klebstoffübertragungseinheit kann den Klebstoff von einer Klebstoffauftragseinheit erhalten.

Damit der Klebstoff ausreichend gekühlt wird, ist bevorzugt vorgesehen, dass der Kühlförderer die Sackkörper mit dem Klebstoff gegen eine gekühlte Fläche des Kühlförderers anliegend befördert. Die Kühlwirkung, d.h. Temperaturübertragung, kann noch weiter gefördert werden, wenn eine Anpresseinrichtung vorgesehen ist, die die Sackkörper gegen den Kühlförderer anpresst, wodurch die Sackkörper gleichzeitig gegen Verrutschen gesichert werden. Eine platzsparende, aber sehr verlässliche Anpresseinrichtung weist zumindest einen dem Kühlförderer gegenüberliegenden Endlosriemen auf, der sich synchron mit dem Kühlförderer bewegt. Um das Übereinanderschieben aufeinanderfolgender Sackkörper zu erleichtern, kann zwischen dem Kühlförderer und der Anpresseinrichtung in einem Einlaufbereich ein Spalt ausgebildet sein, der sich vorzugsweise in Förderrichtung verjüngt. Das Übereinanderschieben (d.h. die "Schuppen"-Anordnung) aufeinanderfolgender Sackkörper geht noch leichter vonstatten, wenn die Anpresseinrichtung im Einlaufbereich federnd gelagert ist.

Um sicher zu stellen, dass ein nachfolgender Sackkörper nicht zwischen den vorhergehenden Sackkörper und den Kühlförderer, sondern über den vorangegangenen Sackkörper geschoben wird, können zwischen dem Transferförderer und dem Kühlförderer Sackkörper-Führungsmittel, insbesondere zumindest ein Einlaufleitblech, angeordnet sein. Um das Weitertransportieren oder Stapeln von fertig konfektionierten Sackkörpern am Ausgang des Kühlförderers verlässlich zu gestalten, kann am Ausgang zumindest ein Auslaufleitblech angeordnet sein.

Um ein Verrutschen der Sackkörper während ihrer Beförderung auf dem Transferförderer bzw. dem Kühlförderer zu verhindern, ist/sind in einer bevorzugten Ausführungsform der Erfindung der Transferförderer und/oder der Kühlförderer mit Sackkörper-Haltemitteln versehen, wobei die Sackkörper-Haltemittel vorzugsweise als Greifer und/oder Vakuumsauger ausgebildet sind.

In einer bevorzugten, kontinuierlich bewegbaren, platzsparenden und mittels Kühlmittel gut kühlbaren Ausführungsform der erfindungsgemäßen Vorrichtung ist der Kühlförderer als Kühltrommel ausgebildet, deren Mantelfläche die Kühlfläche bildet.

Durch eine raue Kühlfläche des Kühlförderers kann die Grenzfläche zwischen Kühlfläche und Oberfläche des Klebstoffes erhöht werden. Durch die Einprägung der rauen Kühlfläche in den Klebstoff vergrößert sich auch die Oberfläche des Klebstoffes, womit eine Erhöhung der Kühlleistung erzielt wird und auch die Kühlung von dickeren Klebstoffschichten ermöglicht wird.

In einer bevorzugten, kontinuierlich bewegbaren und platzsparenden Ausführungsform der erfindungsgemäßen Vorrichtung ist der Transferförderer als Transfertrommel ausgebildet.

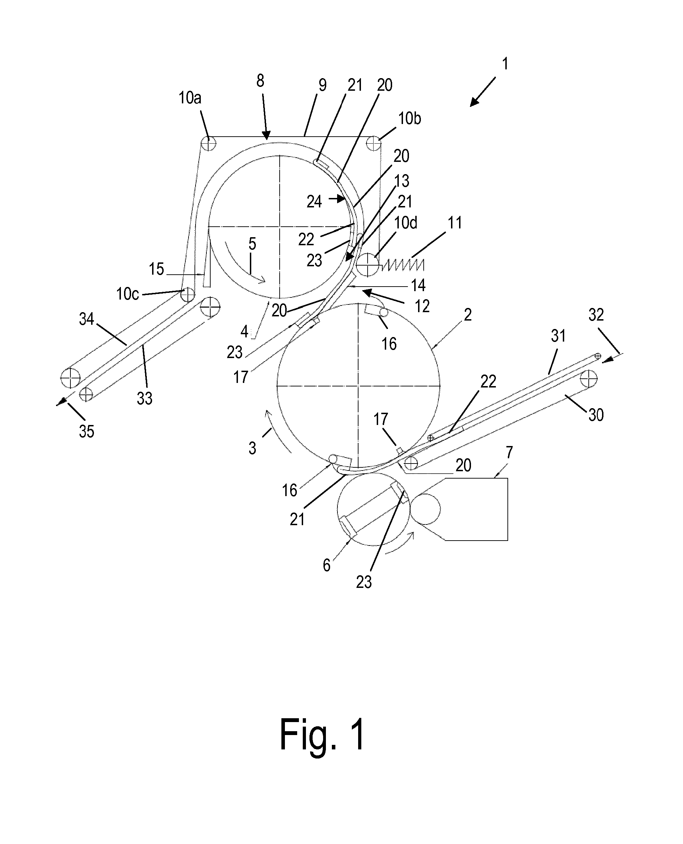

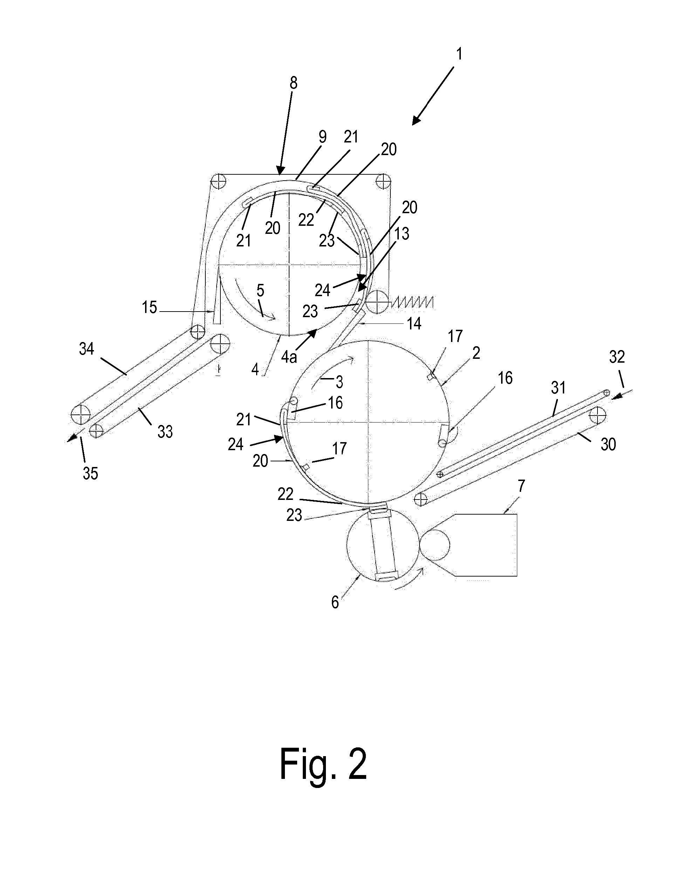

Die Erfindung wird nachfolgend unter Bezugnahme auf die Figuren 1 und 2 näher beschrieben, die eine Ausführungsform der erfindungsgemäßen Kühlvorrichtung zu verschiedenen Betriebszeitpunkten in schematischer Seitenansicht zeigen.

Bei der Konfektion von Pinch Bottom Säcken werden an aus längs zusammengeklebten Flachbahnen oder aus Schlauchgewebe gebildeten Schlauchabschnitten Seitenfalten gebildet. Danach wird an einem Ende der Schlauchabschnitte, dem so genannten "factory end" 21, das beim befüllten Sack das untere Ende und somit den Boden darstellt, ein Pinch Boden geformt, indem das Schlauchende entlang einer Faltlinie um 180° umgeschlagen und mit der Schlauchwand verbunden/verklebt wird. Bei dem solcherart hergestellten Sackkörper 20 erfolgt anschließend der Auftrag eines reaktivierbaren Klebstoffes 23 an einer Sackkörperoberfläche 24 nahe dem offenen Ende des Sackkörpers 20. Dieses offene Ende wird "customer end" 22 genannt und bleibt bei der Auslieferung der Sackkörper an einen Kunden offen. Der Kunde befüllt den Sackkörper mit einem Produkt, zumeist ein Schüttgut, wie z.B. Tierfutter, und verschließt nach dem Befüllen den Sack durch Reaktivierung des Klebstoffes 23 und Umschlagen des offenen Endes des Sackkörpers 20 auf den Klebstoff 23. Danach kann der befüllte Pinch Bottom Sack in die Geschäfte ausgeliefert werden.

Die in den Figuren 1 und 2 dargestellte Vorrichtung 1 stellt einen Teil einer Sack-Konfektionieranlage dar, bei der die an ihrem "factory end" 21 schon verschlossenen Sackkörper 20 von stromaufwärts angeordneten Stationen der Sack-Konfektionieranlage entlang des Pfeils 32 zu einem Eingangsförderer 30 gelangen und zwischen dem Eingangsförderer und einer Anpresseinrichtung 31 zu einem Transferförderer 2 in Form einer Transfertrommel befördert, vom Transferförderer 2 mittels Greifern 16 und Vakuumsaugern 17 übernommen, an der Mantelfläche des trommelförmigen Transferförderers gehalten und mit einer Transfergeschwindigkeit (Pfeil 3) bewegt werden. Es sei erwähnt, dass auch der Eingangsförderer 30 eine Fördergeschwindigkeit aufweist, die gleich der Transfergeschwindigkeit 3 ist. Wie aus den Zeichnungen ersichtlich, ist das "factory end" 21 das führende Ende der Sackkörper 20 auf dem Transferförderer 2 und das "customer end" 22 das hintere Ende.

Am Weg der Sackkörper 20 auf dem Transferförderer 2 ist eine drehzylinderförmige Klebstoffübertragungseinheit 6 angeordnet, die Klebstoff 23 nahe des "customer end" 22 auf eine freiliegende Oberfläche 24 der von auf dem Transferförderer 2 geförderten Sackkörper 20 aufbringt. Die Klebstoffübertragungseinheit 6 erhält den Klebstoff 23 von einer Klebstoffauftragseinheit 7. Nach dem Aufbringen des Klebstoffes 23 auf den Sackkörper 20 wird dieser zu einem Kühlförderer 4 geführt und in einem Einlaufbereich 12 mithilfe von Leitblechen 14 in einen Spalt 13 zwischen dem Kühlförderer 4 und einer Anpresseinrichtung 8 übergeben. Der Kühlförderer 4 ist als Kühltrommel ausgebildet und weist eine durch ein nicht dargestelltes Kühlmittel gekühlte Mantelfläche auf, die als Kühlfläche 4a dient. Wie aus den Zeichnungen ersichtlich, wird bereits ein vorhergehender Sackkörper 20 im Spalt zwischen dem Kühlförderer 4 und der Anpresseinrichtung 8 mit einer Kühlfördergeschwindigkeit (Pfeil 5) befördert, wobei die Oberfläche 24 des Sackkörpers 20, auf der sich der Klebstoff 23 befindet, der Kühlfläche 4a zugewandt ist, die zur Erhöhung der Grenzfläche zum Klebstoff 23 rau ausgebildet ist. Die Anpresseinrichtung 8 weist mehrere über die Breite der Sackkörper 20 verteilte Endlosriemen 9 auf (in der Seitenansicht der Figuren 1 und 2 ist nur ein Endlosriemen 9 zu sehen), die die Sackkörper 20 gegen die Kühlfläche 4a pressen. Die Endlosriemen 9 sind über mehrere Umlenkrollen 10a, 10b, 10c, 10d umgelenkt und bewegen sich synchron, d.h. ebenfalls mit Kühlfördergeschwindigkeit, mit dem Kühlförderer 4. Dabei können die Umlenkrollen freilaufende Rollen sein und die Endlosriemen 9 von der Kühlfläche 4a des Kühlförderers 4 oder von den Sackkörpern 20 mitgezogen werden, oder - alternativ dazu - kann zumindest eine Umlenkrolle eine angetriebene Rolle sein.

Bei der Übergabe der Sackkörper 20 vom Transferförderer 2 an den Kühlförderer 4 unter Führung durch die Leitbleche 14 werden am Transferförderer 2 die Greifer 16 gelöst und die Vakuumsauger 17 abgeschaltet. Da die Transfergeschwindigkeit 3 höher ist als die Kühlfördergeschwindigkeit 5 schiebt sich bei der Übergabe das führende Ende des nachfolgenden Sackkörpers 20 über das hintere Ende des vorhergehenden Sackkörpers 20, wodurch sich die beiden Sackkörper teilweise überlappen. Es entsteht eine "Schuppen-Anordnung". Um den Überlappungsvorgang zu erleichtern, ist im Einlaufbereich 12 die Umlenkrolle 10d mittels einer Feder 11 beweglich gelagert.

Nach der Übergabe der Sackkörper 20 an den Kühlförderer 4 werden die Sackkörper 20 in Schuppen-Anordnung mit der langsamen Kühlfördergeschwindigkeit 5 befördert und haben dadurch eine lange Verweilzeit mit ihrem Klebstoff 23 an der Kühlfläche 4a. Da die Packungsdichte der Sackkörper 20 im Kühlförderer 4 wesentlich höher ist als in den vorangegangenen Stationen der Sack-Konfektionieranlage, durch die die Sackkörper mit der Transfergeschwindigkeit bewegt worden waren, wird dennoch ein hoher Durchsatz an Sackkörpern 20 erreicht. Am Ausgang des Kühlförderers 4 ist ein Auslaufleitblech 15 angeordnet, mit dem die gekühlten Sackkörper 20 zwischen einen Ausgangsförderer 33 und eine Anpresseinrichtung 34 geführt und dann in Richtung 35 zur Stapelung und anschließenden Palettierung abgegeben werden.

## Patentansprüche

1. Vorrichtung (1) zur Kühlung von auf einer Oberfläche (24) von Sackkörpern (20) aufgebrachtem Klebstoff (23), umfassend einen Transferförderer (2) und einen Kühlförderer (4), wobei der Transferförderer (2) die Sackkörper (20) mit einer Transfergeschwindigkeit (3) zum Kühlförderer (4) befördert und der Kühlförderer (4) vom Transferförderer (2) übernommene Sackkörper (20) mit einer Kühlfördergeschwindigkeit (5) befördert, **dadurch gekennzeichnet, dass** die Transfergeschwindigkeit (3) höher ist als die Kühlfördergeschwindigkeit (5).

2. Vorrichtung nach Anspruch 1, **gekennzeichnet durch** eine Klebstoffübertragungseinheit (6), die Klebstoff (23) auf eine freiliegende Oberfläche (24) von auf dem Transferförderer (2) geförderten Sackkörpern (20) aufbringt.

3. Vorrichtung nach Anspruch 2, **gekennzeichnet durch** eine Klebstoffauftragseinheit (7), die Klebstoff auf die Klebstoffübertragungseinheit (6) aufträgt.

4. Vorrichtung nach einem der vorhergehenden Ansprüche, **dadurch gekennzeichnet, dass** der Kühlförderer (4) die Sackkörper mit dem Klebstoff (23) gegen eine Kühlfläche (4a) des Kühlförderers anliegend befördert.

5. Vorrichtung nach einem der vorhergehenden Ansprüche, **gekennzeichnet durch** eine Anpresseinrichtung (8), die die Sackkörper gegen den Kühlförderer anpresst.

6. Vorrichtung nach Anspruch 5, **dadurch gekennzeichnet, dass** die Anpresseinrichtung (8) zumindest einen dem Kühlförderer gegenüberliegenden Endlosriemen (9) aufweist, der sich synchron mit dem Kühlförderer (4) bewegt.

7. Vorrichtung nach Anspruch 5 oder 6, **dadurch gekennzeichnet, dass** zwischen dem Kühlförderer (4) und der Anpresseinrichtung (9) in einem Einlaufbereich (12) ein Spalt (13) ausgebildet ist, der sich vorzugsweise in Förderrichtung verjüngt, wobei bevorzugt die Anpresseinrichtung im Einlaufbereich federnd (11) gelagert ist.

8. Vorrichtung nach einem der vorhergehenden Ansprüche, **dadurch gekennzeichnet, dass** zwischen dem Transferförderer und dem Kühlförderer Sackkörper-Führungsmittel, insbesondere zumindest ein Einlaufleitblech (14), angeordnet sind.

9. Vorrichtung nach einem der vorhergehenden Ansprüche, **dadurch gekennzeichnet, dass** am Ausgang des Kühlförderers zumindest ein Auslaufleitblech (15) angeordnet ist.

10. Vorrichtung nach einem der vorhergehenden Ansprüche, **dadurch gekennzeichnet, dass** der Transferförderer und/oder der Kühlförderer Sackkörper-Haltemittel aufweisen, wobei die Sackkörper-Haltemittel vorzugsweise als Greifer (16) und/oder Vakuumsauger (17) ausgebildet sind.

11. Vorrichtung nach einem der vorhergehenden Ansprüche, **dadurch gekennzeichnet, dass** der Kühlförderer (4) als Kühltrommel ausgebildet ist, deren Mantelfläche die Kühlfläche (4a) bildet.

12. Vorrichtung nach einem der vorhergehenden Ansprüche, **dadurch gekennzeichnet, dass** der Kühlförderer eine raue Kühlfläche (4a) aufweist.

13. Vorrichtung nach einem der vorhergehenden Ansprüche, **dadurch gekennzeichnet, dass** der Transferförderer (2) als Transfertrommel ausgebildet ist.
